# EUROPÄISCHE PATENTSCHRIFT

(11) **EP 2 347 425 B1**
(45) Veröffentlichungstag und Bekanntmachung des Hinweises auf die Patenterteilung: **14.01.2015**
(21) Anmeldenummer: 09752112.4
(22) Anmeldetag: 30.10.2009
(51) Int. Cl.: H01F 7/127, H01F 7/16, F16K 31/06

(54) **ELEKTROMAGNET**
ELECTROMAGNET
ELECTRO-AIMANT

(30) Priorität: 31.10.2008 DE 102008054184; 07.02.2009 DE 102009007983
(43) Veröffentlichungstag der Anmeldung: 27.07.2011
(73) Patentinhaber: Robert Bosch GmbH, 70469 Stuttgart (DE)
(72) Erfinder: ADLER, Bernhard, 89075 Ulm (DE); LORITZ, Steffen, 89081 Ulm (DE); STITZ, Matthias, 97816 Lohr am Main (DE); WITTE, Torsten, 97816 Lohr am Main (DE); BOSCH, Ralf, 89177 Boerslingen (DE)
(74) Vertreter: Thürer, Andreas
(86) Internationale Anmeldenummer: PCT/EP2009/007782
(87) Internationale Veröffentlichungsnummer: WO 2010/049166

(56) Entgegenhaltungen:
- DE-A1-102005 039 640
- DE-U1- 8 704 132
- US-A- 3 727 160
- US-A- 4 055 823
- US-A- 4 649 360
- US-A- 4 805 870

## Beschreibung

Die Erfindung betrifft einen Elektromagneten gemäß dem Oberbegriff des Patentanspruchs 1.

Es sind Elektromagnete bekannt, bei denen eine Magnetspule auf ein Polrohr aufgeschoben ist. Die Magnetspule wird mittels einer auf ein Gewinde des Polrohrs geschraubten Mutter aus Kunststoff oder aus Metall auf dem Polrohr gehalten.

Eine derartige Magnetanordnung ist in der Druckschrift DE 102 20 405 A1 offenbart.

Eine Kunststoffmutter ist nicht setzsicher und temperaturempfindlich. Eine Metallmutter kann oft nicht mit dem für Metall notwendigen Drehmoment angezogen werden, und ist damit auch nicht lösesicher.

Beim Einsatz des Elektromagneten als Aktuator für ein hydraulisches Ventil und insbesondere beim Einsatz unter rauen Bedingungen wie z.B. auf einem mobilen Arbeitsgerät wird die Mutter oft nicht mit dem erforderlichen Drehmoment angezogen. Dadurch kann sich die Magnetspule vom Polrohr lösen.

Die US 3,727,160 zeigt einen Elektromagneten, bei dem eine Spule mit einem elastischen Clip auf einem Polrohr gehalten wird. Nachteilig daran ist die fehlende Verdrehsicherung.

In der DE 10 2005 039 640 A1, die als nächstliegender Stand der Technik angesehen wird, ist ein Elektromagnet offenbart, bei dem ein Federblech elastisch verformt wird und dabei eine Magnetspuleneinheit gegen einen Befestigungsrand oder gegen einen Gewindering spannt. Weiterhin ist eine Verdrehsicherung für die Magnetspuleneinheit an einem dem Federblech gegenüber liegenden Endabschnitt des Elektromagneten vorgesehen.

Nachteilig an derartigen Elektromagneten ist der vorrichtungstechnische Aufwand, der sich durch eine Nut, das darin aufgenommene Federblech, ein Handrad, und an der anderen Seite durch den Befestigungsabschnitt, den Gewindering und eine ringförmige Verdrehsicherung ergibt.

Dem gegenüber liegt der Erfindung die Aufgabe zu Grunde, einen Elektromagneten zu schaffen, dessen Magnetspule auch bei Vibrationen, Temperaturschwankungen, extremen Temperaturen und Feuchtigkeit bzw. Korrosion verdrehsicher auf dem Polrohr gehalten ist und, wenn beabsichtigt, jederzeit einfach von diesem zu lösen ist. Dabei soll der vorrichtungstechnische Aufwand verringert werden.

Diese Aufgabe wird gelöst durch einen Elektromagnet nach Patentanspruch 1.

Weitere vorteilhafte Ausgestaltungen der Erfindung sind in den abhängigen Patentansprüchen beschrieben.

Der erfindungsgemäße Elektromagnet hat ein Polrohr und eine Spule, die das Polrohr umgreift und entlang einer Längsachse des Polrohrs verschiebbar ist. Dabei liegt eine erste Stirnfläche der Spule an einem mit einem ersten Endabschnitt des Polrohrs befestigten ersten Widerlager an. Weiterhin ist zwischen einer zweiten Stirnfläche der Spule und einem mit einem zweiten Endabschnitt des Polrohrs angeordneten zweiten Widerlager ein elastisches Element vorgesehen, das sich am zweiten Widerlager abstützt und die Spule gegen das erste Widerlager vorspannt. Dadurch ist eine gegen Temperaturschwankungen und auch bei Vibrationen dauerhafte und konstant gespannte lösesichere Befestigung der Spule auf dem Polrohr gegeben, die sich auch nach längerer Einwirkung von Feuchtigkeit jederzeit leicht zur Demontage lösen lässt. Dabei ist das zweite Widerlager eine Seitenflanke einer Ringnut des Polrohrs. Insbesondere bei einem freien zweiten Endabschnitt des Polrohrs wird so mit einfachen Mitteln das zweite Widerlager gebildet. Das elastische Element ist eine Tellerfeder, die sich an einem in die Ringnut eingesetzten Sicherungsring abstützt. Der Sicherungsring kann einfach aus der Ringnut entfernt werden, worauf hin die entlastete Tellerfeder und nachfolgend die Spule einfach demontiert werden können. Es ist erfindungsgemäß vorgesehen, dass die Tellerfeder gleichzeitig als Verdrehsicherung dient, dass also die Tellerfeder, der zweite Endabschnitt des Polrohrs und das Spulengehäuse so ausgebildet sind, dass sich im montierten Zustand das Spulengehäuse über die Tellerfeder am besagten Endabschnitt gegen eine Verdrehung abstützt. Damit besitzt die Tellerfeder eine Doppelfunktion. Das Spulengehäuse und der Endabschnitt des Polrohrs können eine einfache, einfach herstellbare geometrische Form aufweisen. Die ggf. etwas aufwändigere Form der Tellerfeder kann z.B. im Stanzverfahren oder Prägeverfahren kostengünstig hergestellt werden.

In einem bevorzugten Ausführungsbeispiel dient der Elektromagnet zur Betätigung eines Ventilkörpers eines hydraulischen Ventils, wobei das erste Widerlager eine Außenwandung eines mit dem ersten Endabschnitt des Polrohrs verbundenen Ventilgehäuses ist. Bei diesem Anwendungsbeispiel ist die Befestigung des ersten Endabschnitts an dem Gehäuse des zu betätigenden hydraulischen Ventils (z.B. durch Einschrauben) üblich, so dass die Außenwandung ohne zusätzlichen Fertigungsaufwand als erstes Widerlager für den Betätigungsmagneten genutzt werden kann.

Dabei sind die o. g. Vorteile von besonderem Nutzen, wenn das hydraulische Ventil an einem mobilen Arbeitsgerät angeordnet ist.

Bei einer nicht zur Erfindung gehörenden Variante ist das elastische Element ein Drahtbügel, der zumindest einen in der Ringnut aufgenommenen Nutabschnitt aufweist. Diese Variante benötigt minimalen Vorrichtungs- und fertigungstechnischen Aufwand, da der Drahtbügel einfach gebogen werden kann, und danach ebenfalls einfach zu montieren und zu demontieren ist.

Bei einer nicht zur Erfindung gehörenden Variante des Drahtbügels ist dieser etwa spiegelsymmetrisch geformt und hat zwei an der Flanke der Ringnut anliegende Nutabschnitte und vier an der zweiten Stirnfläche der Spule anliegende Spulenabschnitte. Damit ist ein sicherer Halt des Drahtbügels in der Ringnut des Polrohres gewährleistet. Außerdem ist eine gleichmäßige Kraftbeaufschlagung und somit verkantungsfreie Verschiebung des Polrohres gegen das erste Widerlager gegeben.

Bei einer anderen nicht zur Erfindung gehörenden Variante des Drahtbügels ist dieser ebenfalls etwa spiegelsymmetrisch geformt und hat zwei Nutabschnitte, die an äußeren Flanken und parallelen Nutgründen der Doppelnut anliegen. Dabei hat der Drahtbügel vier Spulenabschnitte, die in je eine Nut der zweiten Stirnfläche der Spule eintauchen. Damit ist eine Verdrehsicherung geschaffen so dass die Spule in einer vorbestimmten Position auf dem Polrohr gehalten ist.

Zur optimalen Sicherung kann der Drahtbügel das Polrohr mit seinen freien Enden hintergreifen.

Bei beiden Varianten kann zur Abdichtung eines Ringspaltes zwischen dem Polrohr und der Spule ein Dichtring vorgesehen sein, der von dem elastischen Element gegen die zweite Stirnfläche vorgespannt wird.

Aus Gründen der Stützung bzw. gleichmäßigen Kraftverteilung des Dichtrings sollte zwischen dem Drahtbügel und dem Dichtring eine ringförmige Scheibe angeordnet sein.

Bei einer weiteren nicht zur Erfindung gehörenden Variante ist das elastische Element ein Ring (z.B. aus Gummi), der sich an einem in die Ringnut eingesetzten Sicherungsring abstützt. Auch diese Variante benötigt minimalen Vorrichtungs- und fertigungstechnischen Aufwand, da der Ring einfach zu fertigen ist, und danach durch Auf- bzw. Herunterschieben über den zweiten Endabschnitt des Polrohres einfach zu montieren bzw. zu demontieren und durch den Sicherungsring einfach zu fixieren ist.

Neben dem Sicherungsring kann auch der elastische Ring in der (entsprechend verbreiterten) Ringnut angeordnet sein. Dabei kann ein Nutgrundabschnitt der Ringnut im Bereich des elastischen Ringes einen größeren Durchmesser aufweisen, als der Durchmesser eines Nutgrundabschnitts im Bereich des Sicherungsringes.

Um Längenabweichungen und unterschiedliche Ausdehnungen zwischen dem Polrohr und der Spule tolerieren zu können, sollte die Ringnut zu einem kleinen Teil von einem Gehäuse der Spule überdeckt sein.

Bei einer Weiterbildung des Elektromagneten ist als Verdrehsicherung eine zwischen einem Außenmantelabschnitt des Polrohrs und einem Innenmantelabschnitt der Spule gebildete Verzahnung vorgesehen. Dadurch verbleiben auch z.B. nach lange anhaltender Vibration die elektrischen Anschüsse der Spule an der vorgesehenen Stelle des Außenmantels der Spule.

Bei der Erfindung mit der Tellerfeder ist vorzugsweise als Verdrehsicherung eine zwischen einem Außenmantelabschnitt des Polrohrs und einem Innenumfangsabschnitt der Tellerfeder gebildete Verzahnung und weiterhin eine zwischen einem Anlageabschnitt der Tellerfeder und der zweiten Stirnfläche der Spule gebildete Verzahnung vorgesehen. Auch durch eine derartige zweistufige Verzahnung verbleiben auch z.B. nach lange anhaltender Vibration die elektrischen Anschüsse der Spule an der vorgesehenen Stelle.

Bei beiden Verdrehsicherungen bieten sich gleichmäßig am Umfang des Außenmantelabschnitts des Polrohrs verteilten Vorsprüngen und/oder Nuten an, die im Bereich des zweiten Endabschnitts des Polrohrs und im Wesentlichen parallel zu seiner Längsachse angeordnet sind.

Die Verzahnung zwischen dem Anlageabschnitt der Tellerfeder und der zweiten Stirnfläche der Spule wird vorzugsweise von radiale Ausnehmungen der Stirnfläche und entsprechenden radialen Vorsprüngen des Anlageabschnitts oder von radialen Vorsprüngen der Stirnfläche und entsprechenden radialen Ausnehmungen des Anlageabschnitts gebildet. Dabei können die Ausnehmungen und Vorsprünge gleichmäßig am jeweiligen Umfang verteilt sein.

Vorzugsweise weist der zweite Endabschnitt eine oder mehrere Schlüsselflächen auf, wobei insbesondere der zweite Endabschnitt in Form eines Zylinders mit einer polygonalen, ggf. abgerundeten, insbesondere hexagonalen, insbesondere oktogonalen Grundfläche ausgebildet ist. D.h. der zweite Endabschnitt entspricht z.B. einem abgerundeten Sechskant oder einem abgerundeten Achtkant. Die zentrale innere Öffnung der Tellerfeder ist entsprechend der Querschnittsfläche des Endabschnitts ausgebildet ist, so dass sich die Tellerfeder am Endabschnitt im Umlaufrichtung formschlüssig abstützt. Diese Form des zweiten Endabschnitts und der Öffnung der Tellerfeder lässt sich besonders kostengünstig herstellen.

Vorzugsweise sind Kanten der einen oder mehreren Schlüsselflächen von jeweils einem sich in Umlaufsrichtung an der Außenumfangsfläche des zweiten Endabschnitts erstreckenden Nutabschnitt durchbrochen. Es fällt nur geringer Materialabtrag an. Wenn die Nutabschnitte eine in Umlaufsrichtung unterbrochene Ringnut zur Aufnahme des Sicherungsrings bilden, und wenn insbesondere die Ringnut in der Mitte der Schlüsselfläche unterbrochen ist, verbleibt in der Mitte der Schlüsselfläche ein Steg, auf dem die Tellerfeder in ihre Montageposition geschoben werden kann, ohne in die Nut zu fallen.

Vorzugsweise weist die Tellerfeder an ihrem am Spulengehäuse anliegenden Randabschnitt mindestens einen radialen und/oder axialen Vorsprung auf, insbesondere mindestens eine radial-axial vorstehende Lasche, wobei der Vorsprung in eine Vertiefung des Spulengehäuses eingreift. Eine solche Tellerfeder ist als Stanzteil oder als Prägeteil einfach herstellbar.

Im Folgenden werden anhand der Figuren verschiede Ausführungsbeispiele der Erfindung detailliert beschrieben. Es zeigen:
Figur 1 ein erstes Ausführungsbeispiel eines erfindungsgemäßen Elektromagneten mit Tellerfeder in einer perspektivischen Ansicht;
Figur 2 einen Ausschnitt eines perspektivischen Längsschnitts des ersten Ausführungsbeispiels gemäß Figur 1;
Figur 3 einen Elektromagneten mit einem Drahtbügel in einem seitlichen Schnitt;
Figur 4 den Drahtbügel gemäß Figur 3 in einer Ansicht;
Figur 5 einen Elektromagneten mit einem elastischen Ring in einem seitlichen Schnitt;
Figur 6 einen Ausschnitt eines Elektromagneten mit einem elastischen Ring in einem seitlichen Schnitt;
Figur 7 einen Ausschnitt eines Elektromagneten mit einem Drahtbügel in einer perspektivischen Ansicht;
Figur 8 ein zweites Ausführungsbeispiel eines erfindungsgemäßen Elektromagneten mit Tellerfeder in einer perspektivischen Ansicht, als fertigungsoptimierte Abwandlung des ersten Ausführungsbeispiels; und
Figur 9, ein vergrößerter Endabschnitt des Elektromagneten mit Tellerfeder gemäß Figur 8, bei dem ein Sprengring demontiert ist.

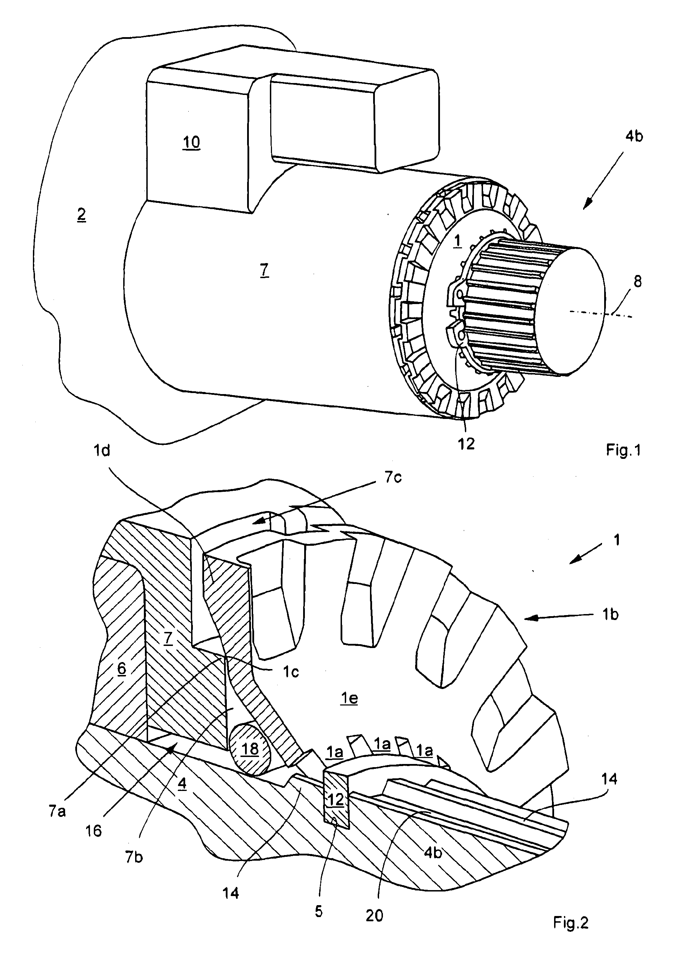

Figur 1 zeigt ein erstes Ausführungsbeispiel eines erfindungsgemäßen Elektromagneten mit einer Tellerfeder 1 in einer perspektivischen Ansicht. Der Elektromagnet dient zur Betätigung eines hydraulischen Ventils, von dem in Figur 1 nur ein Teil des Ventilgehäuses 2 dargestellt ist.

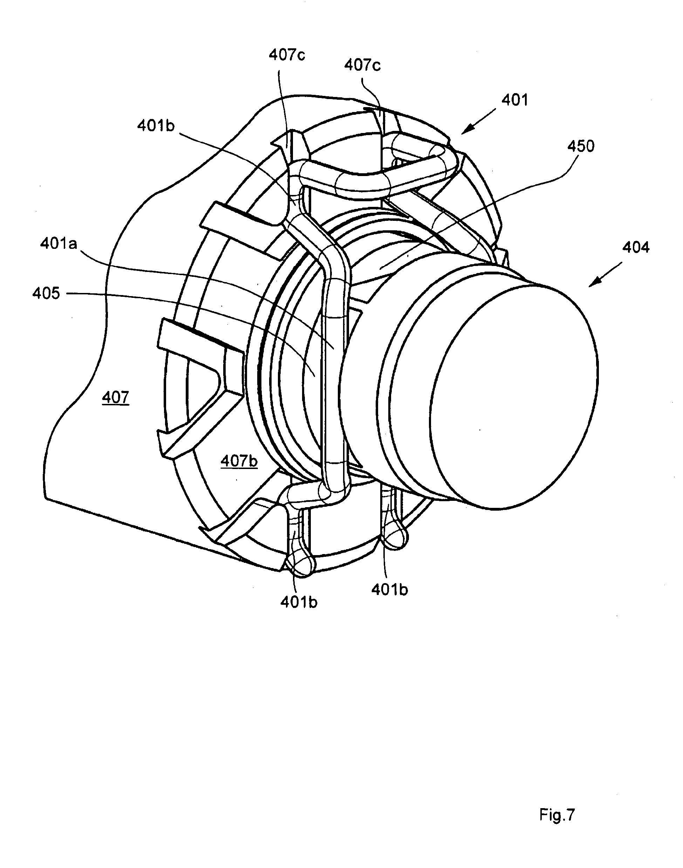

Der Elektromagnet hat ein in etwa kreiszylindrisches Polrohr 4, das an dem Ventilgehäuse 2 befestigt ist und dabei den in Figur 1 gezeigten Wandabschnitt durchdringt. Am Außenumfang des Polrohrs 4 ist eine ebenfalls etwa kreiszylindrische rohrförmige Spule angeordnet, von der in Figur 7 das Spulengehäuse 7 zu sehen ist. Die Spule bzw. ihr Spulengehäuse 7 ist entlang einer Längsachse 8 des Polrohrs 4 (zumindest weitgehend) verschiebbar.

Das Spulengehäuse 7 liegt mit seiner (in Figur 1) linken Stirnfläche an dem Außenwandabschnitt des Ventilgehäuses 2 an.

Am Außenmantel des Spulengehäuses 7 (in Figur 1 oben) ist ein Schaltgehäuse 10 vorgesehen, in dessen Inneren (nicht gezeigte) elektrische Anschlüsse zur Versorgung der Spule angeordnet sind.

Erfindungsgemäß ist das Spulengehäuse 7 über die Tellerfeder 1 (in Figur 1) nach links gegen das Ventilgehäuse 2 vorgespannt und somit an der entsprechenden Stelle entlang der Längsachse 8 des Polrohrs 4 fixiert. Dabei stützt sich die Tellerfeder 1 (in Figur 1) nach rechts gegen einen Sicherungsring 12, der in eine Ringnut 5 des Polrohres 4 eingesetzt ist ab.

Figur 2 zeigt einen Ausschnitt eines perspektivischen Längsschnitts des ersten Ausführungsbeispiels gemäß Figur 1.

Im Innern des Spulengehäuses 7 sind die Wicklungen der Spule 6 aufgenommen. Bei Bestromung der Spule 6 kann ein im Innern des Polrohres 4 angeordneter (nicht gezeigter) Kern bzw. Magnetanker mit Kraft beaufschlagt und entlang der Längsachse 8 verschoben werden. Dadurch wird gemäß dem Stand der Technik ein (nicht gezeigter) Ventilkörper verstellt. So lässt sich das Ventil, an dessen Gehäuse 2 der erfindungsgemäße Magnet montiert ist, schalten.

Die Tellerfeder 1 hat gleichmäßig am Innenumfang verteilte Vorsprünge bzw. Füße 1a auf, deren Querschnittsflächen etwa die Form eines gleichschenkligen Trapezes haben. Jeder Fuß 1a taucht abschnittsweise in eine zugeordnete Längs- bzw. Axialnut 20 des Polrohrs 4 ein. Die Axialnuten 20 sind zwischen am Außenumfang des Polrohrs 4 gebildeten Axialvorsprüngen 14 angeordnet. Die Vorsprünge 14 erstrecken sich am zweiten Endabschnitt 4b des Polrohrs 4 parallel zur Längsachse 8 des Polrohrs 4 (vgl. Figur 1). Dabei haben die Vorsprünge 14 im Querschnitt die Form eines gleichschenkligen Trapezes.

Die Tellerfeder 1 hat außen einen umlaufenden Anlageabschnitt 1 b, der über eine Vielzahl von gleichmäßig am Umfang verteilten Druckstellen 1c am Spulengehäuse 7 anliegt und dieses in der vorbeschriebenen Weise (in Figur 2) nach links gegen das (in Figur 2 nicht gezeigte) Ventilgehäuse 2 vorspannt. Dabei liegen die tellerfederseitigen Druckstellen 1 c an spulenseitigen Kanten 7a an, die ebenfalls gleichmäßig am Umfang einer zweiten Stirnfläche 7b des Spulengehäuses 7 vorgesehen sind. Jede Kante 7a ist eine innere Begrenzung einer radialen Ausnehmung 7c der zweiten Stirnfläche 7b. Die radialen Ausnehmungen 7c sind dem entsprechend ebenfalls gleichmäßig am Umfang der zweiten Stirnfläche 7b des Spulengehäuses 7 verteilt, wobei sie mit Blickrichtung senkrecht zur zweite Stirnfläche 7b jeweils die Form eines gleichschenkligen Trapezes haben.

In die Ausnehmungen 7c des Spulengehäuses 7 tauchen entsprechende Vorsprünge 1d der Tellerfeder 1 ein, die spulenseitig am Anlageabschnitt 1 b der Tellerfeder 1 ausgebildet sind. Dabei haben die Vorsprünge 1d etwas geringere Abmessungen als die Ausnehmungen 7c, so dass die so gebildete Verzahnung bei der Montage reibungsfrei ineinander greifen kann.

Weiterhin bilden die Füße 1a der Tellerfeder 1 mit den Axialvorsprüngen 14 des Polrohrs 4 ebenfalls eine Verzahnung, so dass auf diese Weise eine (zweistufige) Verdrehsicherung zwischen dem Polrohr 4 und dem Spulengehäuse 7 mit der Spule 6 geschaffen ist.

Zwischen dem Spulengehäuse 7 und dem Polrohr 4 kann ein Ringspalt 16 verbleiben. Dieser wird durch einen Dicht- bzw. einen O- Ring 18 abgedichtet, der von einem mittleren Konusabschnitt 1e der Tellerfeder 1 gegen den Ringspalt 16 gedrückt wird.

Erfindungsgemäß ist durch die Tellerfeder 1 eine Fixierung des Spulengehäuses 7 mit der Spule 6 auf dem Polrohr 4 (vergleiche Figur 2) gegeben, wobei die Fixierung durch Verspannen gegen das Ventilgehäuse 2 erfolgt.

Weiterhin ist durch die erfindungsgemäße Verzahnung 1a, 14 zwischen der Tellerfeder 1 und dem Polrohr 4 und die Verzahnung 1 d, 7c zwischen der Tellerfeder 1 und dem Spulengehäuse 7 eine Verdrehsicherung geschaffen, so dass das Schaltgehäuse 10 dauerhaft auch unter rauen Bedingungen und lange dauernder Vibration an der vorbestimmten Stelle verbleibt (vgl. Figur 1).

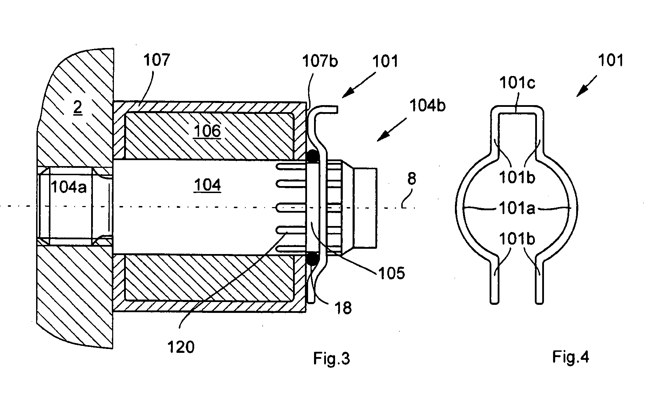

Figur 3 zeigt einen Elektromagneten in einem seitlichen Schnitt. Der wesentliche Unterschied gegenüber dem ersten Ausführungsbeispiel ist darin zu sehen, dass die Tellerfeder 1 und der Sicherungsring 12 durch einen Drahtbügel 101 ersetzt sind.

Das Polrohr 104 weist an seinem ersten Endabschnitt 104a ein Außengewinde auf, über das das Polrohr 104 in eine Durchgangsöffnung des Ventilgehäuses 2 eingeschraubt ist.

An dem zweiten Endabschnitt 104b des Polrohrs 104 sind Axialnuten 120 ausgebildet, die, anders als beim ersten Ausführungsbeispiel nicht durch benachbarte Axialvorsprünge, sondern durch Vertiefungen gebildet sind. Zur Ausbildung einer Verzahnung hat das Spulengehäuse 107 im Bereich des (in Figur 3) rechten Innenumfangs entsprechende (nicht gezeigte) Vorsprünge, die mit den Axialnuten 120 eine Verdrehsicherung zwischen dem Spulengehäuse 107 und dem Polrohr 104 bilden.

Der zweite Endabschnitt 104b des Polrohrs 104 steht über die Spule 107 vor, und besitzt auf Höhe der zweiten Stirnfläche 107b der Spule 107 eine Ringnut 105.

Im Bereich dieser Ringnut 105 ist der einseitig offene federnde Drahtbügel 101 senkrecht zur Achse 8 des Polrohrs 104 über diese geschoben. Der Drahtbügel 101 stützt sich einerseits über seine beiden Nutabschnitte 101a an der einen Seite der Ringnut 105 des Polrohrs 104 und andererseits beidseits des Polrohrs 104 an dem Spulengehäuse 107 ab, und drückt damit dieses gegen das Ventilgehäuse 2. Dabei liegen vier am Umfang verteilte Spulenabschnitte 101 b des Drahtbügels 101 an der Stirnfläche 107b des Spulengehäuses 107 an. Damit ist das Spulengehäuse 107 und somit die Spule 106 axial auf dem Polrohr 104 fixiert.

Damit der Drahtbügel 101 besonders sicher hält, umgreift er mit seinen freien Enden das Polrohr 104.

Das Polrohr 104 und das Spulengehäuse 107 sind jeweils mit einer Verzahnung versehen, wobei die Verzahnungen ineinander greifen, so dass das Spulengehäuse 107 mit der Spule 106 und das Polrohr 104 gegeneinander verdrehgesichert sind. Vorliegend erstreckt sich die Verzahnung an dem Spulengehäuse 107 von dessen zweiten Stirnfläche 107b über eine gewisse Strecke nach Innen. Die Verzahnung 120 am Polrohr 104 befindet sich beidseits der Ringnut 105.

Im Bereich der Ringnut 105 ist unter dem Drahtbügel 101 ein Dichtring 18 gelegt, der den Spalt zwischen dem Polrohr 104 und dem Spulengehäuse 107 abdichtet.

Um eine gleichmäßige Andruckkraft des Dichtrings 18 gegen den abzudichtenden Spalt zu erreichen, ist eine (nicht gezeigte) ringförmige Scheibe zwischen den Dichtring 18 und den Drahtbügel 101 eingefügt. Die Scheibe kann auch konusförmig bzw. kegelstumpfförmig ausgebildet sein und eine Form aufweisen, die derjenigen des Konusabschnitts 1e der Tellerfeder 1 des ersten Ausführungsbeispiels weitgehend entspricht.

Figur 4 zeigt den Drahtbügel 101 gemäß Figur 3 in einer Ansicht. Er ist aus einem durchgehenden Draht gebogen und zu einer (nicht gezeigten) Mittelachse spiegelsymmetrisch. Der Drahtbügel 101 hat einen Verbindungsabschnitt 101c, der im eingebauten Zustand weder an der zweiten Stirnfläche 107b des Spulengehäuses 7 noch an der Ringnut 105 des Polrohrs 104 anliegt.

In einem Winken von etwa 90° zum Verbindungsabschnitt 101c sind die beiden Spulenabschnitte 101b angeordnet, die im eingesetzten Zustand des Drahtbügels 101 am (in Figur 3) oberen Bereich der zweiten Stirnfläche 107b des Spulengehäuses 107 federnd anliegen.

Mit den Spulenabschnitten 101 b sind die beiden kreisbogenförmigen Nutabschnitte 101a verbunden, deren Radien etwa dem des Polrohrs 104 entsprechen. Somit liegen die beiden Nutabschnitte 101 a im eingebauten Zustand des Drahtbügels 101 gegenüberliegend und abschnittsweise an der (in Figur 3) rechten Seitenflanke der Ringnut 105 an.

An die beiden Nutabschnitte 101 a schließt sich jeweils ein weiterer Spulenabschnitt 101 b an, die etwa mit den oben genannten Spulenabschnitten 101 b fluchten. Somit liegen auch die unteren Spulenabschnitte 101b des Drahtbügels 101 im zusammengesetzten Zustand federnd an der zweiten Stirnfläche 107b des Spulenkörpers 107 an.

Auch dieser Elektromagnet stellt eine sichere und einfach lösbare Verbindung zwischen Spule 106 bzw. Spulengehäuse 107 und Polrohr 104 dar. Durch einfaches Herausziehen des Drahtbügels 101 (in den Figuren 3 und 4) nach oben und Abstreifen des Dichtungsrings 18 (in Figur 3) nach rechts kann die Spule 106 mit dem Spulengehäuse 107 (in Figur 3) nach rechts abgezogen werden. Dabei werden die (nicht gezeigten Vorsprünge) des Spulenkörpers 107 entlang den Axialnuten 120 des Polrohrs 104 aus diesen herausgeführt.

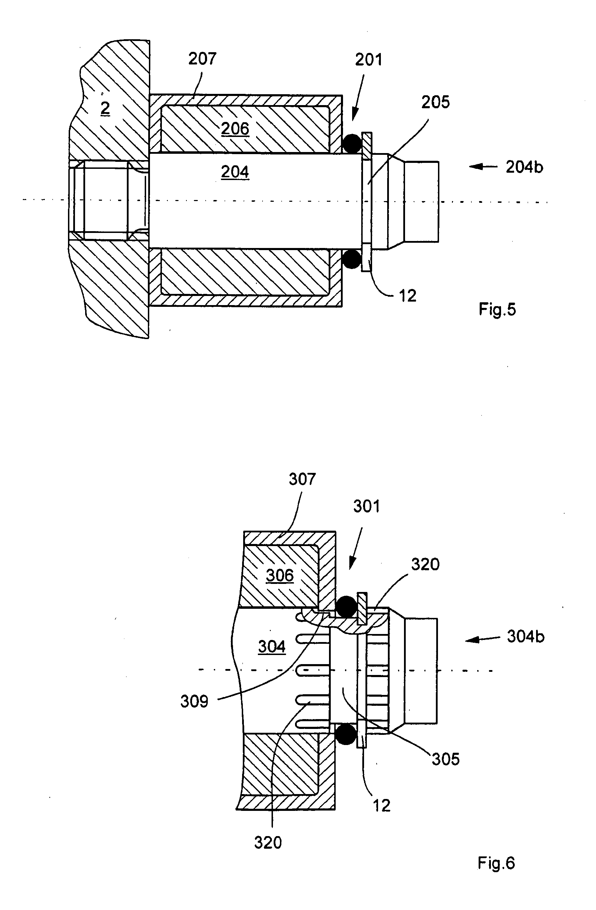

Figur 5 zeigt einen Elektromagneten mit einem elastischen Ring 201 im seitlichen Schnitt. Im Gegensatz zum zweiten Ausführungsbeispiel (gemäß den Figuren 3 und 4) ist beim dritten Ausführungsbeispiel keine Verdrehsicherung vorgesehen. Die Andruckkraft des Spulengehäuses 207 gegen das Ventilgehäuse 2 wird von dem elastischen Ring 201 erzeugt, der am Außenumfang des Polrohrs 204 angeordnet ist. Dabei stützt sich der elastische Ring 201 (in Figur 5) nach rechts an dem Sicherungsring 12 ab. Der Sicherungsring 12 stützt sich (in Figur 5) nach rechts an einer Seitenflanke der Ringnut 205 ab.

Der elastische Ring 201 spannt somit die Spule 206 bzw. das Spulengehäuse 207 (in Figur 5) nach links gegen das Ventilgehäuse 2 vor und dichtet gleichzeitig einen eventuell verbliebenen Ringspalt zwischen dem Spulengehäuse 207 und dem Polrohr 204 ab.

Durch den besonders einfachen Aufbau sind bei dem in Figur 5 gezeigten Elektromagneten der Herstellungs-, Montage- und Demontageaufwand minimal.

Figur 6 zeigt einen Ausschnitt eines Elektromagneten. Dieses Ausführungsbeispiel stellt eine Modifikation des Elektromagneten gemäß Figur 5 dar, wobei die wesentlichen Unterschiede darin zu sehen sind, dass eine Verdrehsicherung vorgesehen ist, und der elastische Ring 301 in der Ringnut 305 aufgenommen ist.

Die Verdrehsicherung dieses Elektromagneten ist prinzipiell mit derjenigen des Elektromagneten gemäß Figur 3 vergleichbar, wobei Figur 6 einen Vorsprung 309 des Spulengehäuses 307 zeigt, der in die entsprechende Axialnut 320 des Polrohrs 304 eingreifen. Da die Vorsprünge 309 gleichmäßig am Innenumfang des Spulengehäuses 307 angeordnet sind, und da sie in die gleichmäßig am Außenumfang des zweiten Endabschnitts 304b des Polrohrs 304 angeordnete Axialnuten 320 eingreifen, ist eine Verdrehsicherung gegeben.

Der zweite Unterschied des Elektromagneten (gemäß Figur 6) gegenüber dem Elektromagneten (gemäß Figur 5) ist die zweistufige Ringnut 305, wobei der Nutbereich des Sicherungsrings 12 einen geringeren Durchmesser hat als der Nutbereich, in dem der elastische Ring 301 aufgenommen ist.

Damit die (in Figur 6) nach links gerichtete Vorspannkraft des elastischen Rings 301 auch trotz eventueller Fertigungsungenauigkeiten auf das Spulengehäuse 307 wirkt, sollte der Abstand von der (nicht gezeigten) Gehäusewand des Ventils zur (in Figur 6) linken Seitenflanke der Ringnut 305 geringer ausgelegt sein, als die Erstreckung des Spulengehäuses 307 entlang der Längsachse 8.

Figur 7 zeigt einen Ausschnitt eines Elektromagneten mit einem Drahtbügel 401 in einer perspektivischen Ansicht. Der Drahtbügel 401 hat prinzipielle Ähnlichkeiten mit dem Drahtbügel 101 des zweiten Ausführungsbeispiels. Abweichend hat der Drahtbügel 401 zwei nicht kreisbogenförmige (vgl. Figur 4) sondern zwei im Wesentlichen gerade Nutabschnitte 401a. Am Polrohr 404 sind statt der Ringnut 105 (vgl. Figur 3) zwei Doppelnuten 405, 450 eingebracht, deren Nutgründe etwa gerade und paarweise parallel zueinander angeordnet sind. Von jeder Doppelnut 405, 450 ist nur eine Nut 405, 450 in Figur 7 dargestellt.

Der Wesentliche Unterschied ist darin zu sehen, dass die Verdrehsicherung über den Drahtbügel 401 verläuft bzw. erfolgt. Dazu tauchen vier Spulenabschnitte 401 b des Drahtbügels 401 in jeweils eine Nut 407c der zweiten Stirnfläche 407b des Spulengehäuses 407 ein. Gleichzeitig tauchen die beiden Nutabschnitte 401a des Drahtbügels 401 in die beiden Nuten der Doppelnut 405 des Polrohres 404 ein. Somit ist eine Verdrehsicherung gegeben, die das Spulengehäuse 407 mit der Spule etwa in der vorbestimmten Position auf dem Polrohr 404 hält. Dabei sind die vier Nuten 407c, die beiden Nuten der Doppelnut 405 und die beiden Nutabschnitte 401a etwa parallel zueinander angeordnet.

Die um 90° zur ersten Doppelnut 405 verdrehte zweite Doppelnut 450 ermöglicht eine um 90° zur gezeigten Position verdrehte Lage des Spulengehäuses 407 mit dem Drahtbügel 401 auf dem Polrohr 404.

Darüber hinaus können auch drei Doppelnuten am Umfang des Polrohres 404 vorgesehen sein.

Abweichend müssen die Verdrehsicherungen nicht durch gleichmäßig am Umfang ausgebildete Verzahnungen gebildet werden, es könnte auch zum Beispiel nur eine Vertiefung und ein entsprechender Vorsprung (zum Beispiel eine Passfeder mit einer Passfedernut) vorgesehen sein.

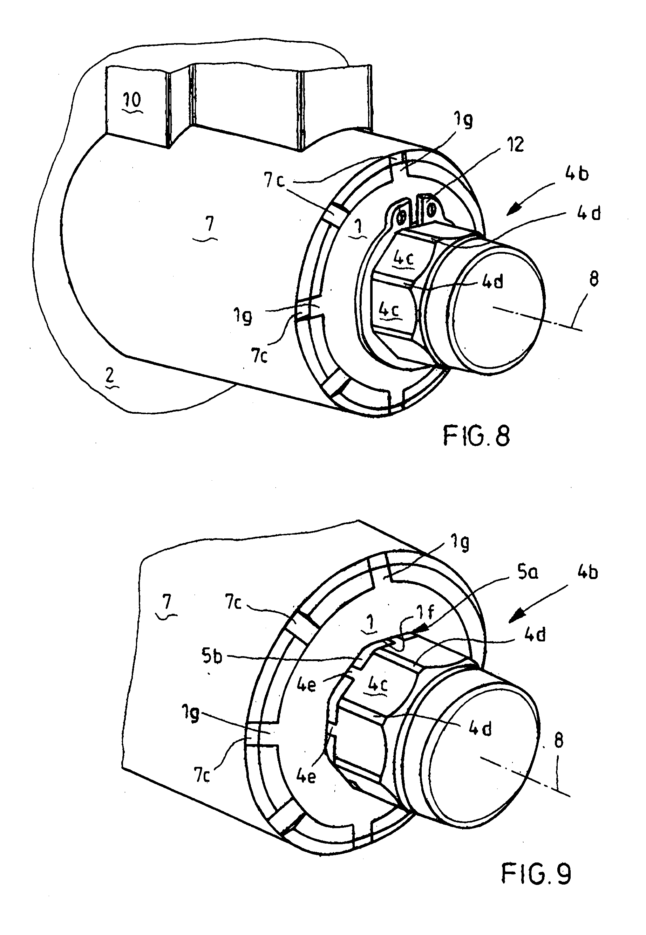

Figur 8 und Figur 9 zeigen ein zweites Ausführungsbeispiel eines erfindungsgemäßen Elektromagneten mit einer Tellerfeder 1 in einer perspektivischen Ansicht. Das zweite Ausführungsbeispiel stimmt in vielen Merkmalen mit dem ersten Ausführungsbeispiel überein. Es wurden Abwandlungen an dem zweiten Endabschnitt 4b des Polrohrs 4, an der Tellerfeder 1 und an dem Spulengehäuse 7 vorgenommen. Gegenüber der Figur 8 ist in der Darstellung der Figur 9 ein Sprengring 12 demontiert, um die Tellerfeder 1 und eine Ringnut 5a besser wiederzugeben.

Das am Ventilgehäuse 2 befestigte Polrohr 4 trägt das auf es aufgeschobene Spulengehäuse 7. Das Spulengehäuse 7 liegt am Ventilgehäuse 2 an. Der gegenüber dem Spulengehäuse 7 überstehende Endabschnitt 4b des Polrohrs 4 ist als abgerundeter Achtkant ausgebildet. Dies bedeutet, dass am Endabschnitt 4b gegenüber einem runden, kreiszylinderförmigen Hauptabschnitt des Polrohrs 4, Schlüsselflächen 4c eingesenkt sind.

Die abgerundeten sich axial erstreckenden Kanten 4d zwischen den Schlüsselflächen 4c sind durch Abschnitte 5b einer umlaufenden, unterbrochenen Ringnut 5a in Umlaufrichtung durchbrochen. Die Ringnut 5a ist jeweils in der Mitte der Schlüsselfläche 4c durch eine Art axial ausgerichteten Steg 4e unterbrochen. Dort ist ausgehend von einer gedachten zylinderförmigen Außenumfangsfläche des Endabschnitts 4b die Einsenktiefe der Schlüsselfläche 4c größer als die Tiefe der Ringnut 5a.

Die Tellerfeder 1 ist im Wesentlichen als konische Scheibe ausgebildet. Sie besitzt eine zentrale Öffnung 1f, welche eine achteckige Form besitzt. Die Öffnung 1f ist in Form und Größe entsprechend dem Endabschnitt 4b gestaltet, d.h. die Öffnung 1f ist so gewählt, dass die Tellerfeder 1 mit minimalem Radialspiel auf den Endabschnitt 4b aufgeschoben werden kann. Die Stege 4e erlauben es dabei, die Tellerfeder 1 über die Ringnut 5a zu schieben, ohne dass die Tellerfeder 1 in die Ringnut 5a fällt. Dies erleichtert die Montage erheblich.

Die Tellerfeder 1 besitzt Laschen 1g, welche an dem Außenrand der Tellerfeder 1 zum Einen radial und zum Anderen axial in Fortsetzung der Konusrichtung der Tellerfeder 1 vorstehen. Am Spulengehäuse 7 sind in der Außenumfangskante, welche dem zweiten Endanschnitt 4b zugewandt ist, Ausnehmungen 7c eingesenkt, welche aufgrund ihrer Abmessungen und Ausrichtung die Laschen 1g der Tellerfeder 1 aufnehmen.

Bei der Montage wird das Spulengehäuse 7 auf das Polrohr 4 aufgeschoben. Dann wird die Tellerfeder 1 auf den zweiten Endabschnitt 4b des Polrohrs 4 aufgeschoben bis sie an dem Spulengehäuse 7 anliegt und die Laschen 1g in die Ausnehmungen 7c eingreifen. Danach wird die Tellerfeder 1 etwas eingedrückt, ggf. mit Hilfe des Sprengrings 12, welcher nach der Tellerfeder 1 aufgeschoben wird, bis er in die Ringnut 5a eingreift.

Ähnlich zu der vorhergehenden Ausführungsform sorgt die Anlage des Spulengehäuses 7 an dem Ventilgehäuse 2 als erstes Widerlager und der Sprengring 12 als zweites Widerlager, mit der Tellerfeder 1, die das Spulengehäuse 7 am Ventilgehäuse 2 in Anlage hält, für eine axiale Festlegung der Lage des Spulengehäuses 7 auf dem Polrohr 4. Darüber hinaus stützt sich das Spulengehäuse 7 über Formschlusselemente mit der Tellerfeder 1 am Polrohr 4 gegen eine Drehbewegung ab. Die Formschlusselemente sind dabei die Ausnehmungen 7c am Spulengehäuse 7, die Laschen 1g an der Tellerfeder 1, die polygonale Formgebung der inneren Öffnung 1f der Tellerfeder 1 und die entsprechende polygonale Formgebung des zweiten Endabschnitts 4b des Polrohrs 4.

Offenbart ist ein Elektromagnet mit einem Polrohr und einer Spule, die das Polrohr umgreift und entlang einer Längsachse des Polrohrs verschiebbar ist. Dabei liegt eine erste Stirnfläche der Spule an einem mit einem ersten Endabschnitt des Polrohrs verbundenen ersten Widerlager an. Erfindungsgemäß ist zwischen einer zweiten Stirnfläche der Spule und einem mit einem zweiten Endabschnitt des Polrohrs verbundenen zweiten Widerlager ein elastisches Element angeordnet, das sich am zweiten Widerlager abstützt und die Spule gegen das erste Widerlager vorspannt. Dadurch ist eine gegen Temperaturschwankungen und auch bei Vibrationen dauerhafte und konstant gespannte Befestigung der Spule auf dem Polrohr gegeben, die sich auch nach längerer Einwirkung von Feuchtigkeit leicht lösen lässt.

Die vorangehend beschriebenen Ausführungsbeispiele und Figuren dienen lediglich dem besseren Verständnis der vorliegenden Erfindung, sie schränken die Erfindung nicht etwa auf die Ausführungsbeispiele ein. Die Figuren sind teilweise grob schematisch gehalten, der Effekt bzw. die Auswirkungen zum Teil deutlich vergrößert bzw. übertrieben dargestellt, um die Funktionsweisen, Wirkprinzipien, technischen Ausgestaltungen und Merkmale zu verdeutlichen. Grundsätzlich kann jede Funktionsweise, jedes Prinzip, jede technische Ausgestaltung und jedes Merkmal, welches/welche in den Figuren oder im Text gezeigt ist/sind, mit allen Ansprüchen, jedem Merkmal im Text und in den anderen Figuren, anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen dem Offenbarungsumfang der Erfindung hinzuzurechnen sind. Dabei sind auch Kombinationen zwischen allen einzelnen Ausführungen im Text, d.h. in jedem Abschnitt des Beschreibungstexts, in den Ansprüchen und auch Kombinationen zwischen verschiedenen Ausführungsbeispielen im Text, in den Ansprüchen und in den Figuren umfasst.

Auch die Ansprüche begrenzen bzw. limitieren nicht die Offenbarung und damit die Kombinationsmöglichkeiten aller aufgezeigten Merkmale untereinander. Alle aufgezeigten Merkmale sind explizit auch einzeln und in Kombination mit allen anderen Merkmalen der Erfindung von dieser Offenbarung umfasst.

### Bezugszeichenliste

- 1: Tellerfeder
- 1a: Fuß
- 1b: Anlageabschnitt
- 1c: Druckstelle
- 1d: Vorsprung
- 1e: Konusabschnitt
- 1f: Öffnung
- 1g: Lasche
- 2: Ventilgehäuse
- 4; 104; 204; 304; 404: Polrohr
- 4b; 104b; 304b: zweiter Endabschnitt
- 4c: Schlüsselfläche
- 4d: Kante
- 4e: Steg
- 5; 105; 205; 305: Ringnut
- 5a: unterbrochene Ringnut
- 6; 106; 206; 306: Spule
- 7; 107; 207; 307; 407: Spulengehäuse
- 7a: Kante
- 7b; 107b; 407b: zweite Stirnfläche
- 7c: Ausnehmung
- 8: Längsachse
- 10: Schaltgehäuse
- 12: Sicherungsring
- 14: Axialvorsprung
- 16: Ringspalt
- 18: Dichtring
- 20; 120; 320: Axialnut
- 101; 401: Drahtbügel
- 101a; 401a: Nutabschnitt
- 101b; 401b: Spulenabschnitt
- 101c: Verbindungsabschnitt
- 104a: erster Endabschnitt
- 201; 301: elastischer Ring
- 309: Vorsprung
- 405; 450: Doppelnut
- 407c: Nut

## Patentansprüche

1. Elektromagnet mit einem Polrohr (4) und mit einer Spule (6), die das Polrohr (4) umgreift und entlang einer Längsachse (8) des Polrohrs (4) verschiebbar gelagert ist, wobei die Spule ein Spulengehäuse (7) aufweist, wobei eine erste Stirnfläche der Spule (6) und ihres Spulengehäuses (7) an einem an einem ersten Endabschnitt des Polrohrs (4) anordenbaren ersten Widerlager (2) anlegbar ist, mit einem zweiten Widerlager, das von einer Seitenflanke einer Ringnut (5; 5a) des Polrohrs (4) an einem zweiten Endabschnitt (4b) des Polrohrs gebildet ist, und mit einem in die Ringnut (5; 5a) eingesetzten Sicherungsring (12),
**dadurch gekennzeichnet, dass**
der Elektromagnet ferner eine Tellerfeder (1) umfasst, welche zwischen einer zweiten Stirnfläche (7b) des Spulengehäuses (7) und dem zweiten Widerlager vorgesehen ist, wobei die Tellerfeder (1) sich im montierten Zustand am zweiten Widerlager abstützt und
die Spule (6) und ihr Spulengehäuse (7) gegen das erste Widerlager (2) vorspannt, wobei sich die Tellerfeder, (1) an dem Sicherungsring (12) abstützt, und wobei die Tellerfeder (1), der zweite Endabschnitt (4b) des Polrohrs (4) und das Spulengehäuse (7) so ausgebildet sind, dass sich im montierten Zustand das Spulengehäuse (7) über die Tellerfeder (1) am besagten zweiten Endabschnitt (4b) gegen eine Verdrehung abstützt.

2. Elektromagnet nach Patentanspruch 1, wobei zwischen der Tellerfeder (1) und dem Spulengehäuses (7) ein Dichtring (18) angeordnet ist, der von der Tellerfeder (1) gegen die zweite Stirnfläche (7b) vorgespannt ist.

3. Elektromagnet nach Patentanspruch 2, wobei zwischen der Tellerfeder (1) und dem Dichtring (18) eine ringförmige Scheibe angeordnet ist.

4. Elektromagnet nach Patentanspruch 1 oder 2, wobei die Verdrehsicherung eine zwischen einem Außenmantelabschnitt des Polrohrs (4) und einem Innenumfangsabschnitt der Tellerfeder (1) gebildete Verzahnung (1a, 14, 20) und eine weitere zwischen einem Anlageabschnitt (1 b) der Tellerfeder (1) und der zweiten Stirnfläche (7b) der Spule (6) oder ihres Gehäuses (7) gebildete Verzahnung (1d; 1g, 7c) aufweist,

5. Elektromagnet nach Patentanspruch 4 mit gleichmäßig am Umfang des Außenmantelabschnitts des Polrohrs (4) verteilten Vorsprüngen (14) und/oder Nuten (20), die im Bereich des zweiten Endabschnitts (4b) des Polrohrs (4) und im Wesentlichen parallel zu seiner Längsachse (8) angeordnet sind.

6. Elektromagnet nach Patentanspruch 4 oder 5, wobei die Verzahnung zwischen dem Anlageabschnitt (1 b) der Tellerfeder (1) und der zweiten Stirnfläche (7b) der Spule (6) oder ihres Gehäuses (7) durch radiale Ausnehmungen (7c) der Stirnfläche (7b) und durch entsprechende radiale Vorsprünge (1d; 1g) des Anlageabschnitts (1b) oder durch radiale Vorsprünge der Stirnfläche und durch entsprechende radiale Ausnehmungen des Anlageabschnitts gebildet ist, und wobei die Ausnehmungen (7c) und Vorsprünge (1d; 1g) gleichmäßige am jeweiligen Umfang verteilt sind.

7. Elektromagnet nach Patentanspruch 1, wobei der zweite Endabschnitt (4b) eine oder mehrere Schlüsselflächen (4c) aufweist, wobei insbesondere der zweite Endabschnitt (4b) in Form eines Zylinders mit einer polygonalen, ggf. abgerundeten, insbesondere hexagonalen, insbesondere oktogonalen Grundfläche ausgebildet ist, und wobei eine zentrale innere Öffnung (1f) der Tellerfeder (1) entsprechend der Querschnittsfläche des Endabschnitts (4b) ausgebildet ist, so dass sich die Tellerfeder (1) am Endabschnitt (4b) in Umlaufrichtung formschlüssig abstützt.

8. Elektromagnet nach Patentanspruch 7, wobei Kanten (4d) der einen oder mehreren Schlüsselflächen (4c) von jeweils einem sich in Umlaufsrichtung an der Außenumfangsfläche des zweiten Endabschnitts (4b) erstreckenden Nutabschnitt (5b) durchbrochen sind.

9. Elektromagnet nach Patentanspruch 8, wobei die Nutabschnitte (5b) eine in Umlaufsrichtung unterbrochene Ringnut (5a) zur Aufnahme des Sicherungsrings (12) bilden, und wobei insbesondere die Ringnut (5a) in der Mitte der Schlüsselfläche (4c) - insbesondere durch einen Steg (4e) - unterbrochen ist.

10. Elektromagnet nach Patentanspruch 1 oder nach einem der Patentansprüche 7 bis 9, wobei die Tellerfeder (1) an ihrem am Spulengehäuse (7) anliegenden Randabschnitt mindestens einen radialen und/oder axialen Vorsprung aufweist, insbesondere mindestens eine radial-axial vorstehende Lasche (1g), wobei der Vorsprung in eine Vertiefung (7c) des Spulengehäuses eingreift.

11. Hydraulisches Ventil mit einem Ventilgehäuse (2), einem Ventilkörper und einem Elektromagnet nach einem der Patentansprüche 1 bis 10 zur Betätigung des Ventilkörpers, wobei das erste Widerlager eine Außenwandung des mit dem ersten Endabschnitt des Polrohrs (4) verbundenen Ventilgehäuses (2) ist.

12. Mobiles Arbeitsgerät an dem ein hydraulisches Ventil nach Anspruch 11 angeordnet ist.

## Claims

1. Electromagnet having a pole tube (4), and having a coil (6) that encompasses the pole tube (4) and is mounted so as to be displaceable along a longitudinal axis (8) of the pole tube (4), the coil having a coil housing (7), a first end face of the coil (6) and of the coil housing (7) thereof being able to be made to bear on a first counter-bearing (2) disposable at a first end portion of the pole tube (4), having a second counter-bearing which is constituted by a side flank of an annular groove (5; 5a) of the pole tube (4) at a second end portion (4b) of the pole tube, and having a retaining ring (12) inserted into the annular groove (5; 5a), **characterized in that** the electromagnet further comprises a disc spring (1) which is provided between a second end face (7b) of the coil housing (7) and the second counter-bearing, the disc spring (1) being supported on the second counter-bearing in the mounted state, and the coil (6) and the coil housing (7) thereof being biased against the first counter-bearing (2), the disc spring (1) being supported on the retaining ring (12), and the disc spring (1), the second end portion (4b) of the pole tube (4) and the coil housing (7) being realized such that, when in the mounted state, the coil housing (7), by means of the disc spring (1), is supported at said second end portion (4b), against a rotation.

2. Electromagnet according to Claim 1, a sealing ring (18) being disposed between the disc spring (1) and the coil housing (7), which sealing ring is biased against the second end face (7b) by the disc spring (1).

3. Electromagnet according to Claim 2, an annular disc being disposed between the disc spring (1) and the sealing ring (18).

4. Electromagnet according to Claim 1 or 2, the lock against rotation having a toothing (1a, 14, 20) constituted between an outer circumferential surface portion of the pole tube (4) and an inner circumferential portion of the disc spring (1) and having a further toothing (1d; 1g, 7c) constituted between a bearing contact portion (1b) of the disc spring (1) and the second end face (7b) of the coil (6) or of the housing (7) thereof.

5. Electromagnet according to Claim 4, having projections (14) and/or grooves (20), which are distributed in a uniform manner on the circumference of the outer circumferential surface portion of the pole tube (4) and which are disposed in the region of the second end portion (4b) of the pole tube (4) and substantially parallelwise in relation to the longitudinal axis (8) thereof.

6. Electromagnet according to Claim 4 or 5, the toothing being constituted, between the bearing contact portion (1b) of the disc spring (1) and the second end face (7b) of the coil (6) or of the housing (7) thereof, by radial recesses (7c) of the end face (7b) and by corresponding radial projections (1d; 1g) of the bearing contact portion (1b), or by radial projections of the end face and by corresponding radial recesses of the bearing contact portion, and the recesses (7c) and projections (1d; 1g) being distributed in a uniform manner on the respective circumference.

7. Electromagnet according to Claim 1, the second end portion (4b) having one or more key surfaces (4c), in particular the second end portion (4b) being realized in the form of a cylinder having a polygonal, possibly rounded, in particular hexagonal, in particular octagonal basic surface, and a central, inner opening (1f) of the disc spring (1) being realized so as to correspond to the cross-sectional surface of the end portion (4b), such that in the circumferential direction the disc spring (1) is supported positively on the end portion (4b).

8. Electromagnet according to Claim 7, edges (4d) of the one or more key surfaces (4c) being breached by respectively one groove portion (5b) extending in the circumferential direction on the outer circumferential surface of the second end portion (4b).

9. Electromagnet according to Claim 8, the groove portions (5b) constituting an annular groove (5a), interrupted in the circumferential direction, for receiving the retaining ring (12), and in particular the annular groove (5a) being interrupted - in particular by a web (4e) - in the center of the key surface (4c).

10. Electromagnet according to Claim 1 or according to any one of Claims 7 to 9, the disc spring (1) having, at its peripheral portion that bears on the coil housing (7), at least one radial and/or axial projection, in particular at least one tab (1g) projecting radially and axially, the projection engaging in a hollow (7c) of the coil housing.

11. Hydraulic valve having a valve housing (2), a valve body and an electromagnet according to one of Claims 1 to 10 for actuating the valve body, the first counter-bearing being an outer wall of the valve housing (2) connected to the first end portion of the pole tube (4).

12. Mobile work device on which a hydraulic valve according to Claim 11 is disposed.

## Revendications

1. Électro-aimant comprenant un tube polaire (4) et comprenant une bobine (6) qui enveloppe le tube polaire (4) et est montée de manière déplaçable le long d'un axe longitudinal (8) du tube polaire (4), la bobine comprenant un boîtier de bobine (7), une première surface frontale de la bobine (6) et de son boîtier de bobine (7) pouvant être appliquée contre une première butée (2) pouvant être disposée à une première portion d'extrémité du tube polaire (4), comprenant une deuxième butée qui est formée par un flanc latéral d'une rainure annulaire (5 ; 5a) du tube polaire (4) à une deuxième portion d'extrémité (4b) du tube polaire, et comprenant une bague de fixation (12) insérée dans la rainure annulaire (5 ; 5a),
**caractérisé en ce que**
l'électro-aimant comporte en outre une rondelle-ressort (1), laquelle est prévue entre une deuxième surface frontale (7b) du boîtier de bobine (7) et la deuxième butée, la rondelle-ressort (1) étant supportée à l'état monté sur la deuxième butée et assurant la précontrainte de la bobine (6) et son boîtier de bobine (7) contre la première butée (2), la rondelle-ressort (1) étant supportée sur la bague de fixation (12), et la rondelle-ressort (1), la deuxième portion d'extrémité (4b) du tube polaire (4) et le boîtier de bobine (7) étant réalisés de telle sorte qu'à l'état monté, le boîtier de bobine (7) soit supporté par le biais de la rondelle-ressort (1) sur ladite deuxième portion d'extrémité (4b) de manière à empêcher une rotation.

2. Électro-aimant selon la revendication 1, dans lequel une bague d'étanchéité (18) est disposée entre la rondelle-ressort (1) et le boîtier de bobine (7), laquelle bague d'étanchéité est précontrainte par la rondelle-ressort (1) contre la deuxième surface frontale (7b).

3. Électro-aimant selon la revendication 2, dans lequel un disque annulaire est disposé entre la rondelle-ressort (1) et la bague d'étanchéité (18).

4. Électro-aimant selon la revendication 1 ou 2, dans lequel la fixation anti-rotation comprend une denture (1a, 14, 20) formée entre une portion d'enveloppe extérieure du tube polaire (4) et une portion périphérique intérieure de la rondelle-ressort (1) et une denture supplémentaire (1d ; 1g, 7c) formée entre une portion d'appui (1b) de la rondelle-ressort (1) et la deuxième surface frontale (7b) de la bobine (6) ou de son boîtier (7).

5. Électro-aimant selon la revendication 4, comprenant des saillies (14) et/ou des rainures (20) réparties uniformément sur la périphérie de la portion d'enveloppe extérieure du tube polaire (4), lesquelles sont disposées dans la région de la deuxième portion d'extrémité (4b) du tube polaire (4) et essentiellement parallèlement à son axe longitudinal (8).

6. Électro-aimant selon la revendication 4 ou 5, dans lequel la denture est formée, entre la portion d'appui (1b) de la rondelle-ressort (1) et la deuxième surface frontale (7b) de la bobine (6) ou de son boîtier (7), par des évidements radiaux (7c) de la surface frontale (7b) et par des saillies radiales correspondantes (1d ; 1g) de la portion d'appui (1b) ou par des saillies radiales de la surface frontale et par des évidements radiaux correspondants de la portion d'appui, et dans lequel les évidements (7c) et les saillies (1d ; 1g) sont répartis uniformément sur la périphérie respective.

7. Électro-aimant selon la revendication 1, dans lequel la deuxième portion d'extrémité (4b) comprend un ou plusieurs méplats (4c), dans lequel la deuxième portion d'extrémité (4b) est en particulier réalisée sous la forme d'un cylindre présentant une surface de base polygonale, éventuellement arrondie, en particulier hexagonale, en particulier octogonale, et dans lequel une ouverture intérieure centrale (1f) de la rondelle-ressort (1) est réalisée de manière correspondante à la surface en section transversale de la portion d'extrémité (4b), de telle sorte que la rondelle-ressort (1) soit supportée par engagement par complémentarité de formes dans la direction périphérique sur la portion d'extrémité (4b).

8. Électro-aimant selon la revendication 7, dans lequel des arêtes (4d) du ou des méplats (4c) sont interrompues par une portion de rainure (5b) respective s'étendant dans la direction périphérique sur la surface périphérique extérieure de la deuxième portion d'extrémité (4b).

9. Électro-aimant selon la revendication 8, dans lequel les portions de rainure (5b) forment une rainure annulaire (5a) interrompue dans la direction périphérique pour recevoir la bague de fixation (12), et dans lequel la rainure annulaire (5a) est en particulier interrompue au centre du méplat (4c), en particulier par une nervure (4e).

10. Électro-aimant selon la revendication 1 ou selon l'une quelconque des revendications 7 à 9, dans lequel la rondelle-ressort (1) comprend, sur sa portion de bord s'appliquant contre le boîtier de bobine (7), au moins une saillie radiale et/ou axiale, en particulier au moins une languette (1g) faisant saillie radialement et axialement, et dans lequel la saillie vient en prise dans un renfoncement (7c) du boîtier de bobine.

11. Soupape hydraulique comprenant un boîtier de soupape (2), un corps de soupape et un électro-aimant selon l'une quelconque des revendications 1 à 10 pour l'actionnement du corps de soupape, dans laquelle la première butée est une paroi extérieure du boîtier de soupape (2) relié à la première portion d'extrémité du tube polaire (4).

12. Engin de travail mobile sur lequel est disposée une soupape hydraulique selon la revendication 11.
